# FASCICULE DE BREVET EUROPEEN

(11) **EP 3 882 129 B1**
(45) Date de publication et mention de la délivrance du brevet: **12.07.2023**
(21) Numéro de dépôt: 21154165.1
(22) Date de dépôt: 29.01.2021
(51) Int. Cl.: B64C 11/00, B64C 27/22, B64C 27/32, B64C 27/57, B64C 11/30

(54) **PROCÉDÉ DE COMMANDE D'HÉLICES D'UN HÉLICOPTÈRE HYBRIDE ET HÉLICOPTÈRE HYBRIDE**
VERFAHREN ZUR STEUERUNG DER PROPELLER EINES HYBRIDHUBSCHRAUBERS UND HYBRIDHUBSCHRAUBER
METHOD FOR CONTROLLING THE PROPELLERS OF A HYBRID HELICOPTER AND HYBRID HELICOPTER

(30) Priorité: 17.03.2020 FR 2002607
(43) Date de publication de la demande: 22.09.2021
(73) Titulaire: Airbus Helicopters, 13725 Marignane Cedex (FR)
(72) Inventeur: EGLIN, Paul, 13830 ROQUEFORT LA BEDOULE (FR); HUOT, Rémy, 13008 MARSEILLE (FR)
(74) Mandataire: GPI Brevets

(56) Documents cités:
- EP-B1- 2 261 119

## Description

La présente invention concerne un procédé de commande d'hélices d'un hélicoptère hybride et aussi un hélicoptère hybride appliquant ce procédé. L'invention se situe dans le domaine technique des systèmes de commande d'un hélicoptère hybride.

Le projet menant à cette invention a reçu un financement du programme de recherche et d'innovation Horizon 2020 de l'Union européenne, dans le cadre de la convention de subvention CleanSky 2 N° « GAM-FRC-2014-001 Issue E ».

Un type de giravion est dénommé « hélicoptère hybride » par commodité en raison de sa spécificité. Un hélicoptère hybride comporte une cellule portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef voire à son avancement.

Un hélicoptère hybride comprend de plus au moins une hélice, possiblement de type hélice tractive ou propulsive. Par exemple, le giravion hybride peut être pourvu d'au moins deux hélices agencées transversalement de part et d'autre du fuselage.

Par ailleurs, un hélicoptère hybride comporte une installation motrice pour mettre en mouvement chaque hélice et le rotor de sustentation, éventuellement en permanence hors cas de panne ou d'essais.

Pour piloter un hélicoptère hybride, un pilote de l'hélicoptère hybride peut manoeuvrer une première commande et une deuxième commande pour contrôler respectivement collectivement et cycliquement le pas des pales du rotor de sustentation, via une architecture mécanique et/ou électrique par exemple. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ».

Notamment sur un hélicoptère hybride à au moins deux hélices situées de part et d'autre du fuselage, le pas des pales de chaque hélice est fonction d'une composante de pas moyen et d'une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas des deux hélices alors que la composante de pas différentiel peut être égale à la demi-différence des premier et deuxième pas des deux hélices.

Dès lors, l'hélicoptère hybride inclut au moins une commande de la poussée apte à modifier la valeur de la composante de pas moyen, via une architecture mécanique et/ou électrique par exemple.

Par exemple, la commande de poussée peut prendre la forme d'un levier ou d'un bouton transmettant un signal analogique, numérique, électrique ou optique à un ou plusieurs actionneurs. Selon un exemple, un tel bouton peut présenter trois états discrets à savoir un premier état dit « beep+ » requérant une augmentation de la valeur de la composante de pas moyen, un deuxième état dit « beep- » requérant une baisse de la valeur de la composante de pas moyen et un troisième état requérant de ne pas modifier la valeur de la composante de pas moyen. Le pas des pales des hélices est alors augmenté tant qu'un pilote positionne le bouton dans son premier état. Selon un autre exemple, le bouton peut prendre la forme d'une molette transmettant un signal analogique à au moins un actionneur pour régler finement la composante de pas moyen du pas des premières et deuxièmes pales.

Par ailleurs, des fonctions de contrôle de direction notamment en lacet peuvent être réalisées par l'utilisation d'une commande de lacet apte à modifier la valeur de la composante de pas différentiel. Par exemple, une telle commande de lacet peut comprendre un palonnier relié par une architecture mécanique et/ou électrique aux hélices. Le palonnier permet de modifier la valeur de la composante de pas différentiel.

Des exemples d'hélicoptères hybrides sont décrits dans les documents US 8181901, US 8170728, US 8052094 et US 8113460 par exemple.

Le pas total des hélices peut être borné pour garantir que l'hélicoptère hybride atteint des objectifs de performances, et/ou de manoeuvrabilité et/ou de résistances à des charges aérodynamiques.

A cet effet, l'hélicoptère hybride peut comporter des organes pour diminuer l'autorité de la commande de lacet à mesure que la composante de pas moyen augmente, et inversement. Ainsi, un même déplacement de la commande de lacet induit des variations différentes de la composante de pas différentiel en fonction de la valeur courante de la composante de pas moyen.

En outre, la commande de lacet peut être bornée mécaniquement et/ou via un actionneur commandé par un calculateur de pilotage pour limiter son déplacement. De même, la commande de poussée peut être bornée.

Dans un diagramme de commande de vol présentant en abscisse le pas d'une première hélice située d'un premier côté de l'aéronef aux yeux d'un pilote de l'hélicoptère hybride et en ordonnée le pas d'une deuxième hélice située d'un deuxième côté de l'hélicoptère hybride aux yeux du pilote, ces pas peuvent dès lors être maintenus dans un domaine délimité par une unique enveloppe. Cette unique enveloppe peut avoir une forme d'entonnoir qui est effilée à mesure que les pas totaux augmentent.

Un tel enseignement est intéressant, mais une enveloppe permettant d'atteindre aussi bien des objectifs de performances et de manoeuvrabilité que de résistances à des charges aérodynamiques à haute vitesse d'avancement peut être délicate à définir sans surdimensionner l'aéronef.

Par exemple, l'enveloppe peut présenter une taille importante pour que l'hélicoptère hybride puisse autoriser toutes les manoeuvres envisagées. L'hélicoptère hybride doit alors être dimensionné pour supporter à haute vitesse les charges aérodynamiques définies par des règlements de certification pour tout le domaine couvert par cette enveloppe large.

Le document EP 2 261 119 décrit un hélicoptère hybride de ce type muni d'un moyen de commande en lacet apte à générer un ordre originel pour modifier l'attitude en lacet dudit hélicoptère hybride. Une commande de poussée est apte à modifier de la même quantité le premier pas des premières pales d'une première hélice et le deuxième pas des deuxièmes pales d'une deuxième hélice. Selon ce document, ledit ordre originel est optimisé en fonction de la position de la commande de poussée pour obtenir un ordre optimisé de commande en lacet transmis auxdites première et deuxième pales.

La présente invention a alors pour objet de proposer un procédé innovant visant à optimiser le dimensionnement d'un hélicoptère hybride.

Ainsi, l'invention vise un procédé de commande d'au moins une première hélice et d'au moins une deuxième hélice, par exemple disposées de part et d'autre d'un fuselage d'un hélicoptère hybride, ledit hélicoptère hybride comportant un rotor de sustentation par exemple agencé au dessus du fuselage, ledit hélicoptère hybride comprenant un système de commande relié à des premières pales de la première hélice et à des deuxièmes pales de la deuxième hélice, ledit hélicoptère hybride ayant une commande de poussée configurée pour générer un ordre de modification d'une composante de pas moyen d'un premier pas des premières pales et d'un deuxième pas des deuxièmes pales transmis au système de commande, ledit hélicoptère hybride ayant une commande de lacet configurée pour générer un ordre de changement d'une composante de pas différentiel du premier pas et du deuxième pas transmis au système de commande, ledit hélicoptère hybride ayant une commande de pas collectif pour modifier une composante de pas collectif d'un pas principal de pales principales du rotor de sustentation.

Ce procédé comporte l'étape suivante : maintien par le système de commande du premier pas et du deuxième pas dans un domaine de commande qui varie en fonction d'une information relative à ladite composante de pas collectif.

Chaque ordre peut prendre la forme d'un signal électrique ou optique, analogique ou numérique ou encore d'une force mettant en mouvement une chaîne mécanique.

Par ailleurs et selon un exemple, ladite information est un signal de commande analogique, numérique, électrique ou optique émis par la commande pas collectif et porteur directement ou indirectement d'une valeur de la composante de pas collectif des pales principales du rotor de sustentation.

Par exemple, la commande de pas collectif comporte un levier mobile en rotation par rapport à un support, un capteur angulaire mesurant une position angulaire du levier et émettant un signal variant en fonction de la valeur commandée de la composante de pas collectif des pales principales. Ce signal représente alors ladite information relative à ladite composante de pas collectif. Selon un autre exemple, un capteur de position usuel mesure une position linéaire ou angulaire d'un organe d'une chaîne de commande pilotant la composante de pas collectif, la position de cet organe variant en fonction de la position de la commande de pas collectif et/ou de l'état d'au moins un vérin série ou de trim.

Selon un autre exemple, le système de commande comporte une chaîne mécanique de commande de lacet et/ou de poussée munie d'un dispositif à géométrie variable, ce dispositif à géométrie variable ayant une forme modifiable mécaniquement par mouvement d'une chaîne mécanique de liaison. Le mouvement de la chaîne mécanique de liaison est piloté par la commande de pas collectif. La position de la chaîne mécanique de liaison qui pilote la forme du dispositif à géométrie variable représente alors ladite information relative à ladite composante de pas collectif, cette position variant de fait lorsque la commande de pas collectif est manoeuvrée.

Quelle que soit la manière de mettre en oeuvre le procédé, le premier pas et le deuxième pas sont bornés à chaque instant pour être en permanence présent dans un domaine de commande. Toutefois, le système de commande modifie ce domaine de commande en fonction de la composante de pas collectif du pas principal des pales principales du rotor de sustentation.

Ainsi, le domaine de commande peut couvrir un ensemble de combinaisons premier pas/deuxième pas autorisées à grande vitesse, par exemple au delà de 150 noeuds. Cet ensemble de combinaisons peut être défini par essais, calculs et/ou simulations pour permettre le contrôle de l'hélicoptère hybride à grande vitesse en supportant des charges aérodynamiques définies par des règlements de certification et par exemple le règlement connu sous la dénomination CS29.351. A grande vitesse, le système de commande empêche mécaniquement et/ou via des actionneurs que le premier pas et le deuxième pas des hélices atteignent des combinaisons n'appartement pas au premier ensemble.

Dans d'autres conditions, le domaine de commande couvre d'autres ensembles de combinaisons premier pas/deuxième pas en fonction d'une information qui varie avec la composante de pas collectif du pas principal de pales principales.

Par exemple, durant une phase de vol en autorotation le domaine de commande peut couvrir un autre ensemble de combinaisons premier pas/deuxième pas autorisées. Ce deuxième ensemble peut présenter des combinaisons interdites par l'ensemble précédent puisque la phase de vol en autorotation est de fait réalisée à basse vitesse et induit des charges aérodynamiques différentes.

D'autres ensembles sont envisageables. Par exemple, pour chaque valeur possible de la composante de pas collectif, le système de commande borne le premier pas et le deuxième pas à un ensemble de combinaisons qui lui est propre.

Ce procédé met alors en oeuvre une architecture à trois entrées pour la commande du premier pas et du deuxième pas, à savoir la commande de pas collectif qui permet au système de commande de définir le domaine de commande à respecter, la commande de lacet et la commande de poussée qui permettent de piloter respectivement la composante de pas différentiel et la composante de pas moyen des pas des pales hélices dans les limites du domaine de commande.

Selon un autre aspect, ce procédé peut alléger la charge de travail du pilote durant une phase de vol stationnaire.

Le procédé peut de plus comprendre une ou plusieurs des caractéristiques qui suivent.

Selon un aspect, le domaine de commande pouvant être borné par une enveloppe dans un diagramme de commande présentant le premier pas en abscisse et le deuxième pas en ordonnée, ladite enveloppe présentant une forme comprenant une ligne fermée, le maintien par le système de commande du premier pas et du deuxième pas dans le domaine de commande peut comporter l'étape suivante :maintien du premier pas et du deuxième pas par le système de commande dans l'enveloppe, ladite enveloppe étant obtenue par transformation d'une enveloppe de référence en fonction de ladite information.

N'importe quelle enveloppe peut être considérée comme étant une enveloppe de référence.

Selon une première variante, la transformation est obtenue par rotation de l'enveloppe de référence dans ledit diagramme de commande autour d'un centre de rotation d'un angle fonction de ladite information.

Par exemple, ledit centre de rotation est positionné dans ledit diagramme de commande à une première valeur PAS1CNT du premier pas et à une deuxième valeur PAS2CNT du deuxième pas, le premier pas et le deuxième pas prenant respectivement la première valeur et la deuxième valeur durant une phase de vol de croisière.

Une telle variante peut tendre à limiter le couplage rotor de sustentation/hélices aux grandes vitesses en limitant la déformation du domaine de commande aux alentours du centre de rotation. A l'inverse, cette variante permet d'obtenir un couplage maximal durant une phase de vol stationnaire.

Selon une deuxième variante, ladite transformation est obtenue par translation de l'enveloppe de référence dans ledit diagramme de commande d'une distance fonction de ladite information.

Selon une troisième variante, ladite transformation est obtenue par déformation de l'enveloppe de référence dans ledit diagramme de commande en fonction de ladite information.

Selon un autre aspect, le maintien par le système de commande du premier pas et du deuxième pas dans un domaine de commande comporte les étapes suivantes à chaque itération :
- maintien du premier pas et du deuxième pas dans une première enveloppe lorsque ladite information est porteuse d'une composante de pas collectif égale à une valeur minimale,
- maintien du premier pas et du deuxième pas dans au moins une deuxième enveloppe lorsque ladite information est porteuse d'une composante de pas collectif égale à une valeur intermédiaire supérieure à la valeur minimale et inférieure à une valeur maximale,
- maintien du premier pas et du deuxième pas dans une troisième enveloppe lorsque ladite information est porteuse d'une composante de pas collectif égale à la valeur maximale.

Le procédé peut prévoir une unique deuxième enveloppe ou une infinité de deuxièmes enveloppes qui séparent continûment la première enveloppe et la troisième enveloppe.

Par exemple, le maintien par le système de commande du premier pas et du deuxième pas dans un domaine de commande comporte les étapes suivantes à chaque itération :
- maintien du premier pas et du deuxième pas dans une première enveloppe lorsque ladite information est porteuse d'une phase de vol stationnaire,
- maintien du premier pas et du deuxième pas dans une deuxième enveloppe lorsque ladite information est porteuse d'une phase de vol en palier,
- maintien du premier pas et du deuxième pas dans une troisième enveloppe lorsque ladite information est porteuse d'une phase de vol en montée.

Les diverses phases de vol peuvent être identifiées de manière usuelle, ladite information comprenant par exemple la valeur d'un ou plusieurs paramètres permettant d'identifier la phase de vol courante.

Selon un autre aspect, la modification du domaine de commande par le système de commande peut être réalisée mécaniquement, à savoir via une succession d'organes mécaniques mobiles, et/ou électriquement ou hydrauliquement à savoir via au moins un actionneur électrique ou hydraulique.

Ainsi, selon une première alternative, le système de commande peut comporter un calculateur de pilotage recevant un signal de commande de poussée émis par la commande de poussée ainsi qu'un signal de commande de lacet émis par la commande de lacet et un signal de commande de pas collectif émis par la commande de pas collectif, ledit calculateur de pilotage pilotant au moins un actionneur du système de commande, le maintien par le système de commande du premier pas et du deuxième pas dans le domaine de commande comporte une étape de commande dudit actionneur par le calculateur de pilotage en fonction au moins d'une loi mémorisée ainsi que dudit signal de commande de poussée et dudit signal de commande de lacet et du signal de commande de pas collectif.

Selon un exemple, le calculateur de pilotage peut comporter une unique loi qui permet de définir un signal à transmettre à au moins un actionneur pour respecter l'ordre donné par un pilote en bornant le premier pas et le deuxième bas dans le domaine de commande adéquat. Une telle loi peut prendre une forme usuelle telle que par exemple une relation mathématique ou un tableau de valeurs ou une suite d'instructions mathématiques.

Selon un autre exemple, le calculateur de pilotage peut appliquer une loi par valeur possible de la composante de pas collectif du pas des premières pales.

Selon une deuxième alternative éventuellement compatible avec la première alternative précédente, le système de commande peut comporter un dispositif mécanique à géométrie variable relié à la commande de pas collectif et à la commande de lacet et à une chaîne mécanique aval reliée à la première hélice et à la deuxième hélice, le maintien par le système de commande du premier pas et du deuxième pas dans le domaine de commande comporte une étape de modification de ladite géométrie variable du dispositif mécanique à géométrie variable par ladite commande de pas collectif.

Par exemple, un tel dispositif mécanique à géométrie variable peut comprendre au moins un organe, dénommé parfois « guignol » ou « guignol de renvoi » ou encore « moyen de renvoi », à rapport variable. Un tel guignol à rapport variable peut être piloté mécaniquement via la commande de pas collectif et/ou via un actionneur piloté par le calculateur de pilotage par exemple. Le document FR 2946317 décrit un exemple de moyen de renvoi à géométrie variable.

Outre un procédé, l'invention vise aussi un hélicoptère hybride muni d'au moins une première hélice et d'au moins une deuxième hélice, par exemple disposées de part et d'autre d'un fuselage, ledit hélicoptère hybride comportant un rotor de sustentation par exemple agencé au dessus du fuselage, ledit hélicoptère hybride comprenant un système de commande relié à des premières pales de la première hélice et à des deuxièmes pales de la deuxième hélice, ledit hélicoptère hybride ayant une commande de poussée configurée pour générer un ordre de modification d'une composante de pas moyen d'un premier pas des premières pales et d'un deuxième pas des deuxièmes pales transmis au système de commande, ledit hélicoptère hybride ayant une commande de lacet configurée pour générer un ordre de changement d'une composante de pas différentiel du premier pas et du deuxième pas transmis au système de commande, ledit hélicoptère hybride ayant une commande de pas collectif pour modifier une composante de pas collectif d'un pas principal de pales principales du rotor de sustentation.

Le système de commande est configuré pour appliquer le procédé de l'invention.

L'invention et ses avantages apparaîtront avec plus de détails dans le cadre de la description qui suit avec des exemples donnés à titre illustratif en référence aux figures annexées qui représentent :
la figure 1, une vue schématique d'un hélicoptère hybride selon l'invention,
la figure 2, une vue schématique d'un système de commande des hélices d'un hélicoptère hybride selon l'invention,
la figure 3, une vue schématique d'un système de commande des hélices d'un hélicoptère hybride selon l'invention,
la figure 4, un diagramme de commande illustrant une première variante du procédé selon l'invention,
la figure 5, un diagramme de commande illustrant une deuxième variante du procédé selon l'invention,
la figure 6, un diagramme de commande illustrant une troisième variante du procédé selon l'invention.

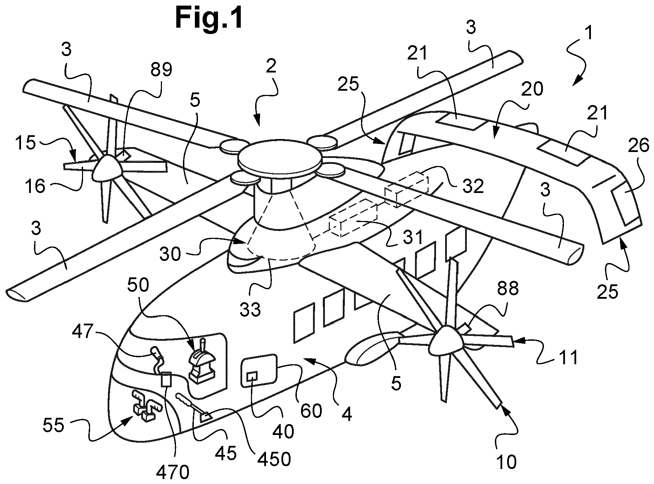

La figure 1 présente un hélicoptère hybride 1 selon l'invention.

Cet hélicoptère hybride 1 comporte un fuselage 4 au dessus duquel est agencé au moins un rotor de sustentation 2. Ce rotor de sustentation 2 est muni de plusieurs pales dénommées « pales principales 3 » par commodité.

De plus, l'hélicoptère hybride 1 est pourvu d'au moins une première hélice 10 et d'au moins une deuxième hélice 15, de type tractive ou propulsive. Les première et deuxième hélices 10, 15 comportent respectivement plusieurs premières pales 11 et plusieurs deuxièmes pales 16. La première hélice 10 et la deuxième hélice 15 peuvent être disposées latéralement par rapport au fuselage 4, notamment de part et d'autre d'un plan antéropostérieur de l'hélicoptère hybride 1. Sur la figure 1 les première et deuxième hélices 10, 15 peuvent être inversées. Les première et deuxième hélices 10, 15 sont éventuellement portées par un support 5. Un tel support 5 peut être éventuellement aérodynamique. Par exemple, le support 5 comporte une aile selon l'illustration de la figure 1. Selon la figure 1, les hélices 10, 15 sont disposées au niveau du bord d'attaque d'une aile. Selon un autre exemple, les hélices 10, 15 peuvent être disposées au niveau du bord de fuite de l'aile.

Par ailleurs, l'hélicoptère hybride 1 peut comprendre des surfaces de stabilisation voire de manoeuvre. Par exemple, l'hélicoptère hybride 1 peut comprendre pour la profondeur au moins un empennage sensiblement horizontal 20 éventuellement avec des gouvernes de profondeur mobiles 21. Par exemple, l'hélicoptère hybride 1 peut comprendre pour la direction au moins un empennage sensiblement vertical 25 éventuellement avec des gouvernes de dérives mobiles 26. La figure 1 illustre ainsi un ensemble arrière en forme de U inversé mais cet ensemble arrière peut avoir diverses formes sans sortir du cadre de l'invention. Selon d'autre exemple, l'ensemble arrière peut avoir une forme de H, une forme de U...

Par ailleurs, l'hélicoptère hybride 1 comporte une installation motrice 30 pour fournir une puissance au rotor de sustentation 2 et éventuellement à chaque hélice 10, 15. Cette installation motrice 30 comporte à cet effet au moins un moteur 31 contrôlé par un calculateur moteur 32 usuel.

Le terme « calculateur » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, l'installation motrice 30 peut comprendre, par exemple au sein d'un système d'interconnexion, au moins une boîte de transmission de puissance, au moins un arbre, et/ou au moins un organe de connexion entre deux organes en rotation... Par exemple, un ou plusieurs moteurs 31 sont reliés mécaniquement par une ou des chaînes de liaison mécaniques à une boîte de transmission de puissance principale 33 qui entraîne en rotation le rotor de sustentation 2. De plus, la boîte de transmission de puissance principale 33 peut être reliée mécaniquement par au moins un arbre à une boîte de transmission de puissance latérale par hélice 10, 15 qui est donc à son tour reliée à une hélice 10, 15.

Les vitesses de rotation des sorties du ou des moteurs 31, des hélices 10, 15, du rotor de sustentation 2 et du système mécanique d'interconnexion sont éventuellement proportionnelles entre elles, le rapport de proportionnalité étant éventuellement constant quelle que soit la configuration de vol de l'hélicoptère hybride 1 en conditions normales de fonctionnement, à savoir hors cas de panne ou d'essais ou de formation.

Par ailleurs, l'hélicoptère hybride 1 peut comprendre diverses commandes pour être piloté.

En particulier, l'hélicoptère hybride 1 peut comprendre un système de commande 40 relié à des commandes de vol pour piloter collectivement et cycliquement le pas des pales principales 3. Un tel système de commande 40 peut par exemple inclure un ensemble de plateaux cycliques. Ainsi, à chaque instant, le pas des pales principales 3 peut être égal à la somme d'un pas collectif identique pour toutes les pales principales 3 et d'un pas cyclique qui varie en fonction de l'azimut de chaque pale principale 3. Le pas des pales principales 3 est dénommé « pas principal » pour être clairement distingué du pas d'autres pales.

Dès lors, l'hélicoptère hybride 1 peut comprendre une commande de pas collectif 45 manoeuvrable par un pilote qui agit sur au moins une chaîne de commande mécanique et/ou électrique du système de commande 40 pour faire varier collectivement le pas principal des pales principales 3, via le cas échéant l'ensemble de plateaux cycliques. Par exemple, la commande de pas collectif 45 comporte un levier. En outre, la commande de pas collectif 45 peut comprendre un senseur de pas collectif 450 qui émet un signal analogique, numérique, électrique ou optique qui varie en fonction de la position d'un organe mobile. Par exemple, la commande de pas collectif 45 comporte un levier et un senseur de pas collectif 450 incluant au moins un capteur de position angulaire pour évaluer une position du levier, tel que par exemple un potentiomètre. Le senseur de pas collectif 450 peut aussi être agencé sur un organe mobile conjointement avec la commande de pas collectif par exemple en aval de vérins série et/ou de trim le cas échéant.

De même, l'hélicoptère hybride 1 peut comprendre une commande de pas cyclique 47 manoeuvrable par un pilote qui agit sur une ou plusieurs chaînes de commande mécaniques et/ou électriques du système de commande pour faire varier cycliquement le pas des pales principales 3, via le cas échéant l'ensemble de plateaux cycliques. En outre, la commande de pas cyclique 47 peut comprendre un senseur de position 470 qui émet un signal analogique, numérique, électrique ou optique qui varie en fonction de la position d'un organe mobile. Par exemple, la commande de pas cyclique 47 comporte un manche et un senseur de position 470 incluant au moins deux capteurs de position angulaire pour évaluer une position du manche, tels que par exemple des potentiomètres.

De manière usuelle, l'hélicoptère hybride 1 peut comprendre des commandes reliées au système de commande 40 pour piloter le pas des premières pales 11 et des deuxièmes pales 16. A chaque instant le premier pas des premières pales 11 de la première hélice 10 peut être égal à la somme d'une composante de pas moyen et d'une composante de pas différentiel alors que le deuxième pas des deuxièmes pales 16 de la deuxième hélice 15 est égal à la différence entre cette composante de pas moyen et la composante de pas différentiel.

Eventuellement, l'hélicoptère hybride 1 comporte un premier senseur 88 de mesure pour mesurer la première valeur du premier pas et un deuxième senseur 89 de mesure pour mesurer la deuxième valeur du deuxième pas. Par exemple, le premier senseur 88 de mesure comporte un capteur de position émettant un signal analogique, numérique, électrique ou optique qui varie en fonction de la position d'un arbre de commande du pas des premières pales 11. De même, le deuxième senseur 89 peut comporter un capteur de position émettant un signal analogique, numérique, électrique ou optique qui varie en fonction de la position d'un arbre de commande du pas des deuxièmes pales 16. Chaque capteur de position peut être d'un type usuel et peut par exemple comprendre un capteur de vitesse permettant d'obtenir une position par intégration, un potentiomètre...

De manière usuelle, l'hélicoptère hybride 1 peut comprendre une commande de poussée 50 manoeuvrable par un pilote qui agit sur une ou plusieurs chaînes de commande mécaniques et/ou électriques du système de commande 40 pour faire varier la composante de pas moyen afin par exemple de piloter une vitesse d'avancement de l'hélicoptère hybride 1. La figure 1 illustre une commande de poussée 50 de type levier mais peut aussi par exemple prendre la forme d'un bouton générant un signal numérique ou d'une molette générant un signal analogique par exemple.

De même, l'hélicoptère hybride 1 peut comprendre une commande de lacet 55 manoeuvrable par un pilote qui agit sur une ou plusieurs chaînes de commande mécaniques et/ou électriques du système de commande 40 pour faire varier la composante de pas différentiel du pas des premières pales 11 et du pas des deuxièmes pales 16. La commande de lacet peut prendre la forme d'un palonnier par exemple.

En outre, le système de commande 40 peut comporter un calculateur de pilotage 60 en communication au moins avec la commande de poussée 50 pour appliquer le procédé de l'invention ainsi qu'éventuellement avec le premier senseur 88 de mesure, le deuxième senseur 89 de mesure et/ou le senseur de pas collectif 450 voire avec une ou plusieurs commandes précitées.

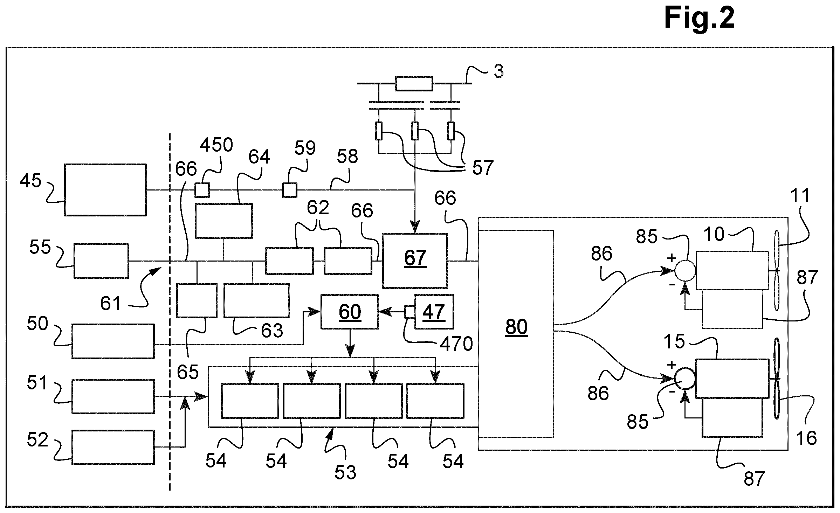

La figure 2 présente un exemple de système de commande 40 des hélices 10, 15.

Selon ce système de commande 40, la commande pas collectif 45 est reliée à une chaîne de commande de pas collectif 58 du système de commande 40 pour piloter la composante de pas collectif des pales principales 3. Par exemple, la chaîne de commande de pas collectif 58 comporte aux moins trois servocommandes 57 articulées à un plateau non tournant de l'ensemble de plateaux cycliques, cet ensemble de plateaux cycliques comprenant un plateau tournant relié par des bielles de pas à un levier de pas de chaque pale principale 3. Eventuellement, la chaîne de commande de pas collectif 58 comporte au moins un actionneur 59 piloté par le calculateur de pilotage 60 relié à un distributeur fluidique de chaque servocommande via des liens usuels. De plus, la chaîne de commande de pas collectif 58 peut aussi comprendre des liens usuels reliés mécaniquement à la commande de pas collectif 45. La chaîne de commande de pas collectif 58 peut aussi comprendre au moins un senseur de pas collectif 450 en communication avec le calculateur de pilotage 60, le senseur de pas collectif 450 émettant un signal variant avec la valeur de la composante de pas collectif. Par exemple, un tel senseur de pas collectif 450 est agencé sur un combinateur non illustré.

Selon ce système de commande 40, la commande de lacet 55 est reliée par une première chaîne mécanique principale 61 à un combinateur mécanique 80 d'une chaîne mécanique aval 70. Cette première chaîne mécanique principale 61 peut comporter au moins un lien rigide 66, au moins un vérin série de lacet 62, des organes 63 générant des efforts de friction. Par exemple, un lien rigide peut prendre la forme d'une bielle ou équivalant. Un dispositif usuel 64 peut aussi amortir les déplacements de la commande de lacet 55. Au moins un vérin de trim de lacet 65 peut être agencé en parallèle de la première chaîne mécanique principale 61. Les vérins de trim en lacet 65 et série de lacet 62 sont commandés par le calculateur de pilotage 60.

En outre, la première chaîne mécanique principale 61 peut comporter un dispositif mécanique à géométrie variable 67 permettant par exemple de modifier un ordre donné par la commande de lacet 55 en fonction d'une manoeuvre de la commande de pas collectif 45 via un déplacement de la chaîne de commande de pas collectif 58 ou d'une chaîne mécanique dédiée et/ou d'une manoeuvre de la commande de poussée 50 directement ou via le calculateur de pilotage 60. Le calculateur de pilotage 60 peut aussi agir sur un ordre donné par la commande de lacet 55 en pilotant les vérins séries de lacet 62 par exemple.

Le combinateur 80 est en outre lié, pour chaque hélice 10, 15, à une tige de commande d'un distributeur hydraulique 85 par une chaîne cinématique secondaire 86 de la chaîne cinématique aval 70, et par exemple par une commande à billes. En fonction des ordres donnés par le pilote, les tiges de commande sont déplacées afin que les distributeurs hydrauliques 85 relient des servocommandes au circuit hydraulique de l'hélicoptère hybride 1 pour modifier le premier pas des premières pales 11 et le deuxième pas de deuxièmes pales 16. Un système de modulation 87 peut moduler les ordres transmis par le combinateur 80. Par exemple un tel système de modulation 87 comporte une tige de recopie du distributeur hydraulique 85 pouvant être déplacée par un actionneur sur ordre du calculateur de pilotage 60.

Par ailleurs, la commande de poussée 50 est liée au combinateur 80 par une deuxième chaîne cinématique principale 53 par exemple, la deuxième chaîne cinématique principale 53 comporte au moins un vérin série de poussée 54 relié mécaniquement au combinateur 80. Chaque vérin série de poussée 54 peut recevoir un signal de commande analogique, numérique, électrique ou optique émis par le calculateur de pilotage 60 sur ordre de la commande de poussée 50. Par suite, la commande de poussée 50 émet un signal analogique, numérique, électrique ou optique qui est transmis au calculateur de pilotage 60, ce calculateur de pilotage 60 pilotant un ou plusieurs vérins série de poussée 54 en conséquence.

Eventuellement, une commande de secours 51 peut aussi être mise en place, et par exemple une commande reliée mécaniquement à la deuxième chaîne cinématique principale 53. Selon un exemple, un levier peut déplacer la deuxième chaîne cinématique principale 53.

Eventuellement, une commande d'immobilisation 52 peut aussi être envisagée pour immobiliser la commande de secours 51.

Dans ces conditions, le combinateur 80 additionne l'ordre de modification de la composante de pas moyen, donné via la commande de poussée 50 par les vérins série de poussée 54, et l'ordre de changement de la composante de pas différentiel donné par la commande de lacet 55. Des ordres de modification de la composante de pas moyen et de changement de la composante de pas différentiel peuvent aussi être émis par le calculateur de pilotage et transmis aux divers vérins série 62, 54 et de trim 65 voire au dispositif 87. Plus précisément, lorsque la commande de poussée 50 est manoeuvrée, un signal de commande est transmis au calculateur de pilotage 60. Le calculateur de pilotage 60 commande alors éventuellement un ou plusieurs vérins séries de poussée 54 pour mettre en mouvement le combinateur 80 afin de modifier la composante de pas moyen des premières pales 11 et des deuxièmes pales 16.

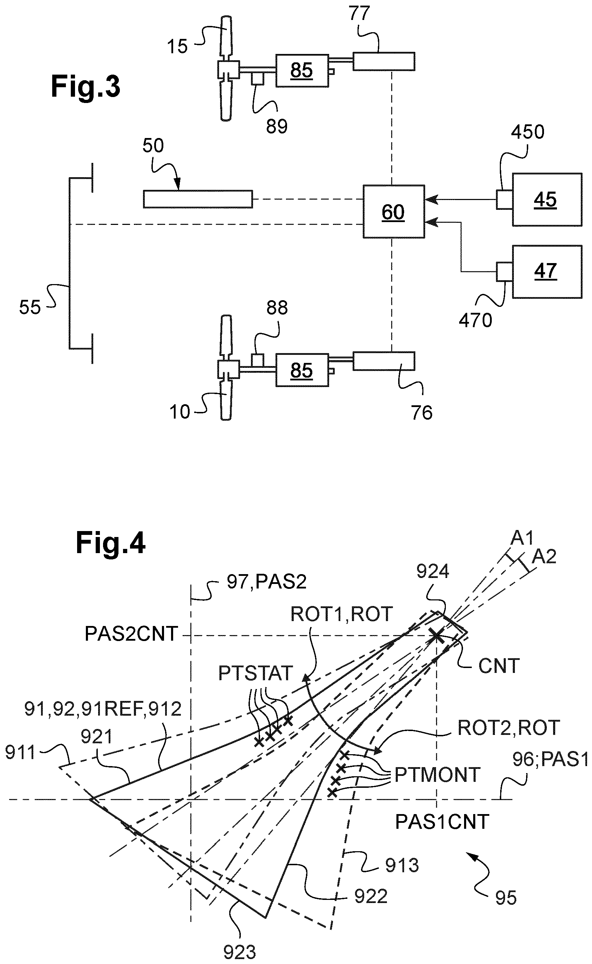

La figure 3 présente un autre exemple de système de commande pour piloter les hélices 10, 15.

Selon cet exemple, la commande de lacet 55, la commande de poussée 50, la commande de pas collectif 45 et la commande de pas cyclique 47 communiquent avec le calculateur de pilotage 60. Ce calculateur de pilotage 60 est en communication avec des actionneurs 76, 77 reliés respectivement aux distributeurs hydrauliques 85.

Le calculateur de pilotage 60 applique alors une ou plusieurs lois mémorisées pour commander les actionneurs 76, 77 en fonction des signaux émis par la commande de lacet 55, la commande de poussée 50 et la commande de pas collectif 45 voire la commande de pas cyclique 47.

Les systèmes de commande des figures 2 et 3 sont donnés à titre d'illustration.

Selon un autre aspect, la figure 4 illustre un diagramme de commande 95 présentant le premier pas PAS1 des premières pales 11 en abscisse 96 et le deuxième pas PAS2 des deuxièmes pales en ordonnée 97.

Selon le procédé de l'invention, à chaque itération, le système de commande 40 maintient le premier pas PAS1 et le deuxième pas PAS2 dans un domaine de commande 90. Toutefois, ce domaine de commande 90 varie sur contrôle du système de commande 40 en fonction d'une information relative à ladite composante de pas collectif.

A chaque itération, le système de commande 40 borne le premier pas PAS1 et le deuxième pas PAS2 en les maintenant dans le domaine de commande 90 autorisé à cette itération, le domaine de commande 90 variant d'une itération à une autre concomitamment avec la composante de pas collectif du pas principal des pales principales 3.

Dans le diagramme de commande 95, à chaque itération du procédé le domaine de commande 90 peut être borné par le système de commande 40 par une enveloppe courante 91 comprenant une ligne fermée 92. Par exemple, une telle ligne fermée 92 comporte un tronçon gauche 921 et un tronçon droit 922 qui bornent la composante de pas différentiel du premier pas PAS1 et du deuxième pas PAS2 ainsi qu'un tronçon inférieur 923 et un tronçon supérieur 924 qui bornent la composante de pas moyen du premier pas PAS1 et du deuxième pas PAS2. La ligne fermée 92 comporte alors successivement le tronçon gauche 921, le tronçon supérieur 924, le tronçon droit 922 et le tronçon inférieur 923 qui rejoint le tronçon gauche 921.

Par exemple, le premier pas PAS1 et le deuxième pas PAS2 sont notamment maintenus dans une première enveloppe 911 lorsque ladite information est porteuse d'une composante de pas collectif qui est égale à une valeur minimale et par exemple lors d'une phase de vol stationnaire.

La première enveloppe 911 permet de positionner le point de fonctionnement courant, défini par le premier pas PAS1 et deuxième pas PAS2 courant, dans des positions PTSTAT. Par exemple, ces positions PTSTAT sont, lors d'une phase de vol stationnaire, sensiblement au centre de la première enveloppe 911.

Par exemple, le premier pas PAS1 et le deuxième pas PAS2 sont notamment maintenus dans une deuxième enveloppe 912 lorsque ladite information est porteuse d'une composante de pas collectif comprise entre la valeur minimale et une valeur maximale, par exemple lors d'une phase de vol en palier. La valeur maximale est supérieure à la valeur minimale.

Par exemple, le premier pas PAS1 et le deuxième pas PAS2 sont notamment maintenus dans une troisième enveloppe 913 lorsque ladite information est porteuse d'une composante de pas collectif égale à la valeur maximale, et par exemple lors d'une phase de vol en montée et en particulier lors d'une phase de vol en montée pilotée en augmentant la composante de pas collectif des pales principales 3.

La troisième enveloppe 913 permet de positionner le point de fonctionnement dans des positions PTMONT lors d'une phase de vol en montée proche du centre de la troisième enveloppe 913.

A chaque itération, l'enveloppe 91 courante peut être obtenue par transformation d'une enveloppe de référence 91REF en fonction de la composante de pas collectif, par exemple la deuxième enveloppe 912 selon l'exemple donné. L'enveloppe de référence peut être alternativement considérée comme étant l'enveloppe courante à l'itération précédente.

Selon la figure 4, la transformation est réalisée par rotation ROT de l'enveloppe de référence 91REF dans le diagramme de commande 95 autour d'un centre de rotation CNT d'un angle A1, A2 fonction de ladite information. Ce centre de rotation CNT est positionné à une première valeur PAS1CNT du premier pas et à une deuxième valeur PAS2CNT du deuxième pas, le premier pas et le deuxième pas prenant respectivement la première valeur PAS1CNT et la deuxième valeur PAS2CNT durant une phase de vol de croisière.

L'enveloppe de référence 91REF est associée à une information relative à une composante de pas collectif de référence. Si la composante de pas collectif baisse, l'enveloppe courante est obtenue par une rotation ROT1 de l'enveloppe de référence 91REF d'un angle A2 selon le sens dextrorsum. A l'inverse, si la composante de pas collectif augmente, l'enveloppe courante est obtenue par une rotation ROT2 de l'enveloppe de référence 91REF d'un angle A1 selon le sens senestrorsum.

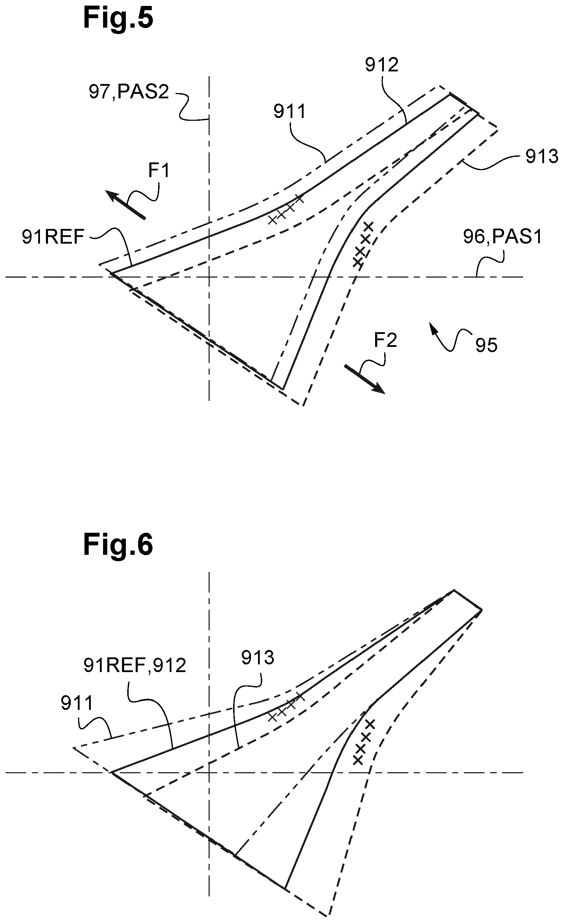

Selon la figure 5, la transformation est obtenue par translation F1, F2 de l'enveloppe de référence 91REF dans ledit diagramme de commande 95 d'une distance fonction de ladite information.

L'enveloppe de référence 91REF est associée à une information relative à une composante de pas collectif de référence. Si la composante de pas collectif baisse, l'enveloppe courante est obtenue par une translation F1 de l'enveloppe de référence. A l'inverse, si la composante de pas collectif augmente, l'enveloppe courante est obtenue par une translation F2 de l'enveloppe de référence 91REF.

Selon la figure 6, la transformation est obtenue par déformation de l'enveloppe de référence 91REF dans ledit diagramme de commande 95 en fonction de ladite information.

Indépendamment de la nature de la transformation, cette transformation est opérée par le système de commande 40 en fonction d'une information image de la valeur de la composante de pas collectif.

Selon la variante de la figure 3, le calculateur de pilotage 60 commande les actionneurs 76, 77 en fonction au moins d'une loi mémorisée ainsi que d'un signal de commande de poussée émis par la commande de poussée, d'un signal de commande de lacet émis par la commande en lacet et d'un signal de commande de pas collectif émis par la commande de pas collectif.

Ladite au moins une loi permet de borner les ordres émis via le signal de commande de poussée et le signal de commande de lacet dans le domaine de commande dépendant du signal de commande de pas collectif.

Selon la variante de la figure 2, le système de commande 40 comporte un dispositif mécanique à géométrie variable 67 qui a une géométrie qui évolue en fonction d'un déplacement de la commande de pas collectif 45. La modification de la géométrie du dispositif mécanique à géométrie variable 67 permet de faire varier le domaine de commande autorisé.

En complément ou de manière alternative, le calculateur de pilotage 60 applique au moins une loi pour commander les vérins séries de poussée 54 et/ou les vérins séries de lacet 67 et/ou les systèmes de modulation 87 à cet effet.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé de commande d'au moins une première hélice (10) et d'au moins une deuxième hélice (15) d'un hélicoptère hybride (1), ledit hélicoptère hybride (1) comportant un rotor de sustentation (2), ledit hélicoptère hybride (1) comprenant un système de commande (40) relié à des premières pales (11) de la première hélice (10) et à des deuxièmes pales (16) de la deuxième hélice (15), ledit hélicoptère hybride (1) ayant une commande de poussée (50) configurée pour générer un ordre de modification d'une composante de pas moyen d'un premier pas (PAS1) des premières pales (11) et d'un deuxième pas (PAS2) des deuxièmes pales (16) transmis au système de commande (40), ledit hélicoptère hybride (1) ayant une commande de lacet (55) configurée pour générer un ordre de changement d'une composante de pas différentiel du premier pas (PAS1) et du deuxième pas (PAS2) transmis au système de commande (40), ledit hélicoptère hybride (1) ayant une commande de pas collectif (45) pour modifier une composante de pas collectif d'un pas principal de pales principales (3) du rotor de sustentation (2),
**caractérisé en ce que** ledit procédé comporte l'étape suivante : maintien par le système de commande (40) du premier pas (PAS1) et du deuxième pas (PAS2) dans un domaine de commande (90) qui varie en fonction d'une information relative à ladite composante de pas collectif.

2. Procédé selon la revendication 1,
**caractérisé en ce que** ledit domaine de commande (90) étant borné par une enveloppe (91) dans un diagramme de commande (95) présentant le premier pas (PAS1) en abscisse et le deuxième pas (PAS2) en ordonnée, ladite enveloppe (91) présentant une forme comprenant une ligne fermée (92), le maintien par le système de commande (40) du premier pas (PAS1) et du deuxième pas (PAS2) dans le domaine de commande (90) comporte l'étape suivante : maintien du premier pas (PAS1) et du deuxième pas (PAS2) par le système de commande (40) dans l'enveloppe (91), ladite enveloppe (91) étant obtenue par transformation d'une enveloppe de référence (91REF) en fonction de ladite information.

3. Procédé selon la revendication 2,
**caractérisé en ce que** ladite transformation est obtenue par rotation (ROT) de l'enveloppe de référence (91REF) dans ledit diagramme de commande (95) autour d'un centre de rotation (CNT) d'un angle (A1, A2) fonction de ladite information.

4. Procédé selon la revendication 3,
**caractérisé en ce que** ledit centre de rotation (CNT) est positionné dans ledit diagramme de commande (95) à une première valeur (PAS1CNT) du premier pas et à une deuxième valeur (PAS2CNT) du deuxième pas, le premier pas et le deuxième pas prenant respectivement la première valeur et la deuxième valeur durant une phase de vol de croisière.

5. Procédé selon la revendication 2,
**caractérisé en ce que** ladite transformation est obtenue par translation (F1, F2) de l'enveloppe de référence (91REF) dans ledit diagramme de commande (95) d'une distance fonction de ladite information.

6. Procédé selon la revendication 2,
**caractérisé en ce que** ladite transformation est obtenue par déformation de l'enveloppe de référence (91REF) dans ledit diagramme de commande (95) en fonction de ladite information.

7. Procédé selon l'une quelconque des revendications 1 à 6,
**caractérisé en ce que** le maintien par le système de commande (40) du premier pas (PAS1) et du deuxième pas (PAS2) dans le domaine de commande (90) comporte les étapes suivantes à chaque itération :
- maintien du premier pas (PAS1) et du deuxième pas (PAS2) dans une première enveloppe (911) lorsque ladite information est porteuse d'une composante de pas collectif égale à une valeur minimale,
- maintien du premier pas (PAS1) et du deuxième pas (PAS2) dans au moins une deuxième enveloppe (912) lorsque ladite information est porteuse d'une composante de pas collectif égale à une valeur intermédiaire supérieure à la valeur minimale et inférieure à une valeur maximale,
- maintien du premier pas (PAS1) et du deuxième pas (PAS2) dans une troisième enveloppe (913) lorsque ladite information est porteuse d'une composante de pas collectif égale à la valeur maximale.

8. Procédé selon l'une quelconque des revendications 1 à 6,
**caractérisé en ce que** le maintien par le système de commande (40) du premier pas (PAS1) et du deuxième pas (PAS2) dans un domaine de commande (90) comporte les étapes suivantes à chaque itération :
- maintien du premier pas (PAS1) et du deuxième pas (PAS2) dans une première enveloppe (911) lorsque ladite information est porteuse d'une phase de vol stationnaire,
- maintien du premier pas (PAS1) et du deuxième pas (PAS2) dans une deuxième enveloppe (912) lorsque ladite information est porteuse d'une phase de vol en palier,
- maintien du premier pas (PAS1) et du deuxième pas (PAS2) dans une troisième enveloppe (913) lorsque ladite information est porteuse d'une phase de vol en montée.

9. Procédé selon l'une quelconque des revendications 1 à 8,
**caractérisé en ce que** le système de commande (40) comportant un calculateur de pilotage (60) recevant un signal de commande de poussée émis par la commande de poussée (50) ainsi qu'un signal de commande de lacet émis par la commande de lacet (55) et un signal de commande de pas collectif émis par la commande de pas collectif (45), ledit calculateur de pilotage (60) pilotant au moins un actionneur (54, 62, 76, 77, 87) du système de commande (40), le maintien par le système de commande (40) du premier pas (PAS1) et du deuxième pas (PAS2) dans le domaine de commande (90) comporte une étape de commande dudit actionneur (54, 62, 76, 77, 87) par le calculateur de pilotage (60) en fonction au moins d'une loi mémorisée ainsi que dudit signal de commande de poussée et dudit signal de commande de lacet et du signal de commande de pas collectif.

10. Procédé selon l'une quelconque des revendications 1 à 9,
**caractérisé en ce que** le système de commande (40) comporte un dispositif mécanique à géométrie variable (67) relié à la commande de pas collectif (45) et à la commande de lacet (55) et à une chaîne mécanique aval (70) reliée à la première hélice (10) et à la deuxième hélice (15), le maintien par le système de commande (40) du premier pas (PAS1) et du deuxième pas (PAS2) dans le domaine de commande (90) comporte une étape de modification de ladite géométrie variable du dispositif mécanique à géométrie variable par ladite commande de pas collectif (45).

11. Hélicoptère hybride (1) muni d'au moins une première hélice (10) et d'au moins une deuxième hélice (15), ledit hélicoptère hybride (1) comportant un rotor de sustentation (2), ledit hélicoptère hybride (1) comprenant un système de commande (40) relié à des premières pales (11) de la première hélice (10) et à des deuxièmes pales (16) de la deuxième hélice (15), ledit hélicoptère hybride (1) ayant une commande de poussée (50) configurée pour générer un ordre de modification d'une composante de pas moyen d'un premier pas (PAS1) des premières pales (11) et d'un deuxième pas (PAS2) des deuxièmes pales (16) transmis au système de commande (40), ledit hélicoptère hybride (1) ayant une commande de lacet (55) configurée pour générer un ordre de changement d'une composante de pas différentiel du premier pas (PAS1) et du deuxième pas (PAS2) transmis au système de commande (40), ledit hélicoptère hybride (1) ayant une commande de pas collectif (45) pour modifier une composante de pas collectif d'un pas principal de pales principales (3) du rotor de sustentation (2),
**caractérisé en ce que** ledit système de commande (40) est configuré pour appliquer le procédé selon l'une quelconque des revendications 1 à 10.

## Patentansprüche

1. Verfahren zum Steuern mindestens eines ersten Propellers (10) und mindestens eines zweiten Propellers (15) eines Hybridhubschraubers (1), wobei der Hybridhubschrauber (1) einen Auftriebsrotor (2) aufweist, wobei der Hybridhubschrauber (1) ein Steuersystem (40) umfasst, das mit ersten Blättern (11) des ersten Propellers (10) und mit zweiten Blättern (16) des zweiten Propellers (15) verbunden ist, wobei der Hybridhubschrauber (1) eine Schubsteuerung (50) aufweist, die konfiguriert ist, um einen Befehl zur Änderung einer mittleren Anstellwinkelkomponente eines ersten Anstellwinkels (PAS1) der ersten Blätter (11) und eines zweiten Anstellwinkels (PAS2) der zweiten Blätter (16) zu erzeugen, der an das Steuersystem (40) übertragen wird, wobei der Hybridhubschrauber (1) eine Giersteuerung (55) aufweist, die konfiguriert ist, um einen Befehl zur Änderung einer differentiellen Anstellwinkelkomponente des ersten Anstellwinkels (PAS1) und des zweiten Anstellwinkels (PAS2) zu erzeugen, der an das Steuersystem (40) übertragen wird, wobei der Hybridhubschrauber (1) eine kollektive Anstellwinkelsteuerung (45) zum Ändern einer kollektiven Anstellwinkelkomponente eines Hauptanstellwinkels von Hauptblättern (3) des Auftriebsrotors (2) aufweist,
**dadurch gekennzeichnet, dass** das Verfahren den folgenden Schritt umfasst:
Halten des ersten Anstellwinkels (PAS1) und des zweiten Anstellwinkels (PAS2) durch das Steuersystem (40) innerhalb eines Steuerbereichs (90), der in Abhängigkeit von Information über die kollektive Anstellwinkelkomponente variiert.

2. Verfahren nach Anspruch 1,
**dadurch gekennzeichnet, dass** in einem Steuerdiagramm (95), in dem der erste Anstellwinkel (PAS1) an der Abszisse und der zweite Anstellwinkel (PAS2) an der Ordinate aufgetragen ist, der Steuerbereich (90) durch eine Hüllkurve (91) begrenzt ist, wobei die Hüllkurve (91) eine Form aufweist, die eine geschlossene Linie (92) umfasst, wobei das Halten des ersten Anstellwinkels (PAS1) und des zweiten Anstellwinkels (PAS2) in dem Steuerbereich (90) durch das Steuersystem (40) den folgenden Schritt umfasst:
Halten des ersten Anstellwinkels (PAS1) und des zweiten Anstellwinkels (PAS2) innerhalb der Hüllkurve (91) durch das Steuersystem (40), wobei die Hüllkurve (91) durch Transformation einer Referenzhüllkurve (91REF) in Abhängigkeit von der Information erhalten wird.

3. Verfahren nach Anspruch 2,
**dadurch gekennzeichnet, dass** die Transformation durch Drehen (ROT) der Referenzhüllkurve (91REF) in dem Steuerdiagramm (95) um einen Drehmittelpunkt (CNT) um einen Winkel (A1, A2) in Abhängigkeit von der Information erhalten wird.

4. Verfahren nach Anspruch 3,
**dadurch gekennzeichnet, dass** der Drehmittelpunkt (CNT) in dem Steuerdiagramm (95) bei einem ersten Wert (PAS1CNT) des ersten Anstellwinkels und bei einem zweiten Wert (PAS2CNT) des zweiten Anstellwinkels positioniert wird, wobei der erste Anstellwinkel und der zweite Anstellwinkel den ersten Wert bzw. den zweiten Wert während einer Reiseflugphase annehmen.

5. Verfahren nach Anspruch 2,
**dadurch gekennzeichnet, dass** die Transformation durch Translation (F1, F2) der Referenzhüllkurve (91REF) in dem Steuerdiagramm (95) um einen von der Information abhängigen Abstand erhalten wird.

6. Verfahren nach Anspruch 2,
**dadurch gekennzeichnet, dass** die Transformation durch Verformen der Referenzhüllkurve (91REF) in dem Steuerdiagramm (95) in Abhängigkeit von der Information erhalten wird.

7. Verfahren nach einem der Ansprüche 1 bis 6,
**dadurch gekennzeichnet, dass** das Halten des ersten Anstellwinkels (PAS1) und des zweiten Anstellwinkels (PAS2) in dem Steuerbereich (90) durch das Steuersystem (40) bei jeder Iteration die folgenden Schritte umfasst:
- Halten des ersten Anstellwinkels (PAS1) und des zweiten Anstellwinkels (PAS2) innerhalb einer ersten Hüllkurve (911), wenn die Information eine kollektive Anstellwinkelkomponente überträgt, die gleich einem Minimalwert ist,
- Halten des ersten Anstellwinkels (PAS1) und des zweiten Anstellwinkels (PAS2) innerhalb mindestens einer zweiten Hüllkurve (912), wenn die Information eine kollektive Anstellwinkelkomponente überträgt, die gleich einem Zwischenwert ist, der größer als der Minimalwert und kleiner als ein Maximalwert ist,
- Halten des ersten Anstellwinkels (PAS1) und des zweiten Anstellwinkels (PAS2) innerhalb einer dritten Hüllkurve (913), wenn die Information eine kollektive Anstellwinkelkomponente überträgt, die gleich dem Maximalwert ist.

8. Verfahren nach einem der Ansprüche 1 bis 6,
**dadurch gekennzeichnet, dass** das Halten des ersten Anstellwinkels (PAS1) und des zweiten Anstellwinkels (PAS2) in einem Steuerbereich (90) durch das Steuersystem (40) bei jeder Iteration die folgenden Schritte umfasst:
- Halten des ersten Anstellwinkels (PAS1) und des zweiten Anstellwinkels (PAS2) innerhalb einer ersten Hüllkurve (911), wenn die Information eine Schwebeflugphase überträgt,
- Halten des ersten Anstellwinkels (PAS1) und des zweiten Anstellwinkels (PAS2) innerhalb einer zweiten Hüllkurve (912), wenn die Information eine Horizontalflugphase überträgt,
- Halten des ersten Anstellwinkels (PAS1) und des zweiten Anstellwinkels (PAS2) innerhalb einer dritten Hüllkurve (913), wenn die Information eine Steigflugphase überträgt.

9. Verfahren nach einem der Ansprüche 1 bis 8,
**dadurch gekennzeichnet, dass** das Steuersystem (40) einen Steuerrechner (60) umfasst, der ein von der Schubsteuerung (50) ausgegebenes Schubsteuersignal sowie ein von der Giersteuerung (55) ausgegebenes Giersteuersignal und ein von der kollektiven Anstellwinkelsteuerung (45) ausgegebenes kollektives Anstellwinkelsteuersignal empfängt, wobei der Steuerrechner (60) mindestens einen Aktuator (54, 62, 76, 77, 87) des Steuersystems (40) ansteuert, wobei das Halten des ersten Anstellwinkels (PAS1) und des zweiten Anstellwinkels (PAS2) im Steuerbereich (90) durch das Steuersystem (40) einen Schritt des Ansteuerns des Aktuators (54, 62, 76, 77, 87) durch den Steuerrechner (60) in Abhängigkeit von mindestens einer gespeicherten Gesetzmäßigkeit sowie vom Schubsteuersignal, vom Giersteuersignal und vom kollektiven Anstellwinkelsteuersignal umfasst.

10. Verfahren nach einem der Ansprüche 1 bis 9,
**dadurch gekennzeichnet, dass** das Steuersystem (40) eine mechanische Vorrichtung mit variabler Geometrie (67) umfasst, die mit der kollektiven Anstellwinkelsteuerung (45) und der Giersteuerung (55) und mit einer nachgeschalteten mechanischen Kette (70) verbunden ist, die mit dem ersten Propeller (10) und dem zweiten Propeller (15) verbunden ist, und das Halten des ersten Anstellwinkels (PAS1) und des zweiten Anstellwinkels (PAS2) innerhalb des Steuerbereichs (90) durch das Steuersystem (40) einen Schritt des Änderns der variablen Geometrie der mechanischen Vorrichtung mit variabler Geometrie durch die kollektive Anstellwinkelsteuerung (45) umfasst.

11. Hybridhubschrauber (1) mit mindestens einem ersten Propeller (10) und mindestens einem zweiten Propeller (15), wobei der Hybridhubschrauber (1) einen Auftriebsrotor (2) aufweist, wobei der Hybridhubschrauber (1) ein Steuersystem (40) aufweist, das mit ersten Blättern (11) des ersten Propellers (10) und mit zweiten Blättern (16) des zweiten Propellers (15) verbunden ist, wobei der Hybridhubschrauber (1) eine Schubsteuerung (50) aufweist, die konfiguriert ist, um einen Befehl zur Änderung einer mittleren Anstellwinkelkomponente eines ersten Anstellwinkels (PAS1) der ersten Blätter (11) und eines zweiten Anstellwinkels (PAS2) der zweiten Blätter (16) zu erzeugen, der an das Steuersystem (40) übertragen wird, wobei der Hybridhubschrauber (1) eine Giersteuerung (55) aufweist, die konfiguriert ist, um einen Befehl zur Änderung einer differentiellen Anstellwinkelkomponente des ersten Anstellwinkels (PAS1) und des zweiten Anstellwinkels (PAS2) zu erzeugen, der an das Steuersystem (40) übertragen wird, wobei der Hybridhubschrauber (1) eine kollektive Anstellwinkelsteuerung (45) aufweist, um eine kollektive Anstellwinkelkomponente eines Hauptanstellwinkels von Hauptblättern (3) des Auftriebsrotors (2) zu ändern,
**dadurch gekennzeichnet, dass** das Steuerungssystem (40) konfiguriert ist, um das Verfahren nach einem der Ansprüche 1 bis 10 anzuwenden.

## Claims

1. Method for controlling at least one first propeller (10) and at least one second propeller (15) of a hybrid helicopter (1), said hybrid helicopter (1) comprising a lift rotor (2), said hybrid helicopter (1) comprising a control system (40) connected to first blades (11) of the first propeller (10) and to second blades (16) of the second propeller (15), said hybrid helicopter (1) having a thrust control (50) configured to generate an order for modifying a mean pitch component of a first pitch (PAS1) of the first blades (11) and of a second pitch (PAS2) of the second blades (16) transmitted to the control system (40), said hybrid helicopter (1) having a yaw control (55) configured to generate an order for changing a differential pitch component of the first pitch (PAS1) and of the second pitch (PAS2) transmitted to the control system (40), said hybrid helicopter (1) having a collective pitch control (45) for modifying a collective pitch component of a main pitch of main blades (3) of the lift rotor (2),
**characterised in that** said method comprises the following step of:
the control system (40) maintaining the first pitch (PAS1) and the second pitch (PAS2) in a control domain (90) that varies as a function of information relating to said collective pitch component.

2. Method according to Claim 1,
**characterised in that** said control domain (90) is limited by a perimeter (91) in a control diagram (95) with the first pitch (PAS1) on the abscissa and the second pitch (PAS2) on the ordinate, with said perimeter (91) assuming a shape comprising a closed line (92), the control system (40) maintaining the first pitch (PAS1) and the second pitch (PAS2) in the control domain (90) comprises the following step of:
the control system (40) maintaining the first pitch (PAS1) and the second pitch (PAS2) in the perimeter (91), with said perimeter (91) being acquired by converting a reference perimeter (91REF) as a function of said information.

3. Method according to Claim 2,
**characterised in that** said conversion is acquired by rotating (ROT) the reference perimeter (91REF) in said control diagram (95) around a centre of rotation (CNT) by an angle (A1, A2) as a function of said information.

4. Method according to Claim 3,
**characterised in that** said centre of rotation (CNT) is positioned in said control diagram (95) at a first value (PAS1CNT) of the first pitch and at a second value (PAS2CNT) of the second pitch, with the first pitch and the second pitch respectively assuming the first value and the second value during a cruising flight phase.

5. Method according to Claim 2,
**characterised in that** said conversion is acquired by translation (F1, F2) of the reference perimeter (91REF) in said control diagram (95) by a distance as a function of said information.

6. Method according to Claim 2,
**characterised in that** said conversion is acquired by deforming the reference perimeter (91REF) in said control diagram (95) as a function of said information.

7. Method according to any one of Claims 1 to 6,
**characterised in that** the control system (40) maintaining the first pitch (PAS1) and the second pitch (PAS2) in the control domain (90) comprises the following steps, upon each iteration, of:
- maintaining the first pitch (PAS1) and the second pitch (PAS2) in a first perimeter (911) when said information includes a collective pitch component equal to a minimum value;
- maintaining the first pitch (PAS1) and the second pitch (PAS2) in at least one second perimeter (912) when said information includes a collective pitch component equal to an intermediate value greater than the minimum value and less than a maximum value;
- maintaining the first pitch (PAS1) and the second pitch (PAS2) in a third perimeter (913) when said information includes a collective pitch component equal to the maximum value.

8. Method according to any one of Claims 1 to 6,
**characterised in that** the control system (40) maintaining the first pitch (PAS1) and the second pitch (PAS2) in a control domain (90) comprises the following steps, upon each iteration, of:
- maintaining the first pitch (PAS1) and the second pitch (PAS2) in a first perimeter (911) when said information includes a stationary flight phase;
- maintaining the first pitch (PAS 1) and the second pitch (PAS2) in a second perimeter (912) when said information includes a horizontal flight phase;
- maintaining the first pitch (PAS1) and the second pitch (PAS2) in a third perimeter (913) when said information includes a climbing flight phase.

9. Method according to any one of Claims 1 to 8,
**characterised in that** the control system (40) comprises a control computer (60) receiving a thrust control signal transmitted by the thrust control (50), as well as a yaw control signal transmitted by the yaw control (55) and a collective pitch control signal transmitted by the collective pitch control (45), said control computer (60) controlling at least one actuator (54, 62, 76, 77, 87) of the control system (40), the control system (40) maintaining the first pitch (PAS1) and the second pitch (PAS2) in the control domain (90) comprises a step of the control computer (60) controlling said actuator (54, 62, 76, 77, 87) as a function of at least one stored law, as well as of said thrust control signal and of said yaw control signal and of the collective pitch control signal.

10. Method according to any one of Claims 1 to 9,
**characterised in that** the control system (40) comprises a variable geometry mechanical device (67) connected to the collective pitch control (45) and to the yaw control (55) and to a downstream mechanical chain (70) connected to the first propeller (10) and to the second propeller (15), the control system (40) maintaining the first pitch (PAS1) and the second pitch (PAS2) in the control domain (90) comprises a step of modifying said variable geometry of the variable geometry mechanical device using said collective pitch control (45).

11. Hybrid helicopter (1) provided with at least one first propeller (10) and at least one second propeller (15), said hybrid helicopter (1) comprising a lift rotor (2), said hybrid helicopter (1) comprising a control system (40) connected to first blades (11) of the first propeller (10) and to second blades (16) of the second propeller (15), said hybrid helicopter (1) having a thrust control (50) configured to generate an order for modifying a mean pitch component of a first pitch (PAS1) of the first blades (11) and of a second pitch (PAS2) of the second blades (16) transmitted to the control system (40), said hybrid helicopter (1) having a yaw control (55) configured to generate an order for changing a differential pitch component of the first pitch (PAS1) and of the second pitch (PAS2) transmitted to the control system (40), said hybrid helicopter (1) having a collective pitch control (45) for modifying a collective pitch component of a main pitch of main blades (3) of the lift rotor (2),
**characterised in that** said control system (40) is configured to apply the method according to any one of Claims 1 to 10.
